# EUROPÄISCHE PATENTANMELDUNG

(11) **EP 0 691 723 A2**
(43) Veröffentlichungstag der Anmeldung: **10.01.1996**
(21) Anmeldenummer: 95108617.2
(22) Anmeldetag: 06.06.1995
(51) Int. Cl.: H02H 7/085, E05F 15/00

(54) **Verfahren zum automatischen Schliessen von Öffnungen und Vorrichtung zur Durchführung des Verfahrens**

(30) Priorität: 10.06.1994 DE 4420361
(71) Anmelder: ABB PATENT GmbH, D-68309 Mannheim (DE)
(72) Erfinder: Henkelmann, Dieter, D-90473 Nürnberg (DE); Beuter, Richard, D-58840 Plettenberg (DE)
(74) Vertreter: Rupprecht, Klaus, Dipl.-Ing.

(57) **Zusammenfassung**

Motorgetriebene Verschlußteile zum Schließen von Öffnungen, wie z.B. Fensterscheiben oder Schiebedächern von PKWs, bergen eine Unfallgefahr durch Einklemmen. Eine Schließvorrichtung, die dieser Gefahr begegnet aber andererseits sicherstellt, daß sich bei einer gestörten Sicherheitseinrichtung die Öffnung schließen läßt, sorgt dafür, daß beim Auftreten eines Defektes, der durch die Wirkung der Sicherheitsschaltung zu einem unerwünschten Reversieren des Motorstromes führt, nach Ablauf einer vorgegebenen Zeit ein von der Sicherheitsschaltung ausgehender Befehl zum Reversieren des Motorstroms automatisch oder infolge einer Handbetätigung abgeschaltet oder unterdrückt wird und dadurch ein zwangsweises Schließen der Öffnung ermöglicht wird.

## Beschreibung

Die Erfindung betrifft ein Verfahren nach dem Oberbegriff der Ansprüchen 1 und 4 und eine Vorrichtung nach dem Oberbegriff der Ansprüche 6 und 7.

Eine Automatisierung von Schließvorrichtungen fördert einerseits die Bequemlichkeit, birgt andererseits aber die Gefahr von Verletzungen. Dies gilt insbesondere für Schließvorrichtungen bei Kraftfahrzeugen, da sich der Fahrzeugführer beim Fahren primär auf den Verkehr konzentriert und durch leichtfertiges oder ungewolltes Betätigen der Schließvorrichtung für sich und seine Mitfahrer eine nicht unerhebliche Gefährdung auslösen kann. So ist es leicht möglich, daß beim Schließen eines Fensters oder Schiebedachs Körperteile eingeklemmt und ggf. auch verletzt werden.

Bekannt sind Schließvorrichtungen, die dem Motor direkt oder über Schaltverstärker, wie Relais und Leistungshalbleiter schalten. Um Verletzungen zu vermeiden, hat man bereits in den Rahmenteilen einer Öffnung, die durch ein Verschlußteil, also z. B. eine Scheibe oder ein Schiebedach geschlossen wird, Drucksensoren angebracht. Diese sorgen bei partiellem, auf nur einige Drucksensoren ausgeübtem Druck für ein Umschalten des Motorstroms in Öffnungsrichtung, so daß die Einklemmsituation selbsttätig wieder behoben wird.

Vorrichtungen dieser Art, bei denen eine Sicherheitsschaltung dafür sorgt, daß ein Schließvorgang beim Auftreten einer Gefahrensituation abgebrochen wird und durch Reversieren des Motorstroms automatisch in einen Öffnungsvorgang übergeht, können im Fehlerfall zu erheblichen Problemen führen. Um eine Gefahrensituation, wie das Einklemmen eines Körperteils zu erfassen, wird mindestens eine Erfassungseinheit benötigt. Häufig ergibt deren Ansprechen aber noch keine eindeutige Aussage, weil für diese Erfassungseinheit im Schließzustand gleichartige Verhältnisse vorliegen wie im Gefahrenzustand. In diesen Fällen wird deshalb zur Unterscheidung mindestens eine weitere Erfassungseinheit benötigt, die den Schließzustand des Verschlußteils signalisiert. Falls eine dieser Erfassungseinheiten oder nur einer der zugehörigen Sensoren defekt ist, kann die Sicherheitsschaltung das Vorliegen eines Gefahrenzustandes vortäuschen und die Verschlußvorrichtung immer wieder öffnen. Für einen PKW-Besitzer, der seinen Wagen auf einem Parkplatz abstellen will, ist es aber höchst unerfreulich, wenn sich das Schiebedach oder das Fenster nicht mehr schließen läßt.

Aufgabe der Erfindung ist es deshalb, eine Schließvorrichtung nach dem Oberbegriff des Anspruchs 1 so zu verbessern, daß Fehlfunktionen der Schließvorrichtung automatisch erkannt und durch sie ausgelöste unerwünschte Wirkungsweisen vermieden werden.

Diese Aufgabe wird durch die in den Ansprüchen 1, 2, 6 und 7 jeweils gekennzeichneten Merkmale gelöst. Zweckmäßige Ausgestaltungen und Weiterbildungen des Erfindungsgegenstandes sind in den Unteransprüchen genannt.

Erfindungsgemäß wird beim Auftreten eines Defektes, der durch die Wirkung der Sicherheitsschaltung zu einem unerwünschten Reversieren des Motorstromes führt, nach Ablauf einer vorgegebenen Zeit ein von der Sicherheitsschaltung ausgehender Befehl zum Reversieren des Motorstroms automatisch oder infolge einer Handbetätigung abgeschaltet oder unterdrückt. Da man davon ausgehen kann, daß im Gefahrenfall auch die betreffende Person reagiert und relativ schnell die Gefahrensituation durch Zurückziehen des gefährdeten Körperteils beseitigt, kann nach Ablauf einer angemessenen Zeit die defekte Sicherheitseinrichtung relativ risikolos abgeschaltet werden, um dadurch ein zwangsweises Schließen der Öffnung zu ermöglichen.

In einer erste Ausführungsvariante wird das zwangsweise Schließen automatisch herbeigeführt. Dies geschieht dadurch, daß Zustände, die zu einer ein Einklemmen verhindernden Umkehr der Motorlaufrichtung führen, erfaßt werden und nach einer angemessenen Verzögerung automatisch eine erneute Umkehr der Motorlaufrichtung zum Schließen der Öffnung bewirken. Weiterhin werden im Fall anhaltender Meldung eines Gefahrenzustandes die hierdurch ausgelösten Umkehrzyklen des Motorstromes gezählt und nach einer vorgegebenen Zyklenzahl wird die offensichtlich fehlerhafte Meldung eines Gefahrenzustandes ignoriert und die Entscheidungslogik löst ein von der Sicherheitsschaltung unabhängiges Schließen der Öffnung aus.

Bei einer zweiten Ausführungsvarianten der erfindungsgemäßen Lösung ist vorgesehen, daß eine Hilfseinheit den von einem handbetätigten Taster ausgehenden Schließbefehl erfaßt. Mit Hilfe eines Zeitgliedes wird die von der Dauer des Tastendrucks abhängige Befehlsdauer bewertet und nach Überschreiten einer vorgegebenen Zeit ein Steuerbefehl ausgelöst, der zum Abschalten oder Unterdrücken des von der Sicherheitsschaltung ausgehenden Befehls führt. Es handelt sich hierbei um eine besonders bedienerfreundliche Lösungsvariante, da man auch bei fehlender Kenntnis dieser nur im Fehlerfall wichtigen Bedienfunktion automatisch versuchen wird durch verlängertes Drücken des Bedientasters ein zwangsweises Schließen der Öffnung zu erreichen.

Durch ein weiteres erfindungsgemäßes Verfahren kann die gestellte Aufgabe auch auf ganz andere Weise gelöst werden. Hierbei steht die Überlegung im Vordergrund, daß ein fehlerhaftes Reversieren des Motors weitgehend ausgeschlossen werden kann, wenn es gelingt störanfällige Sensoren, wie z.B.Schaltkontakte, zu überprüfen und im Zweifel auf ein Reversieren des Motors zu verzichten. Dies erscheint insbesondere dann tragbar, wenn der Fehlerzustand durch einen Signalgeber hör- oder sichtbar gemacht wird. Außerdem ist das Einklemmrisiko nicht so groß, daß es nicht für eine gewisse Zeit in Kauf genommen werden könnte. Die weitere erfindungsgemäße Lösung sieht deshalb vor, daß von den durch Erfassungseinheiten erfaßten Zuständen, soweit diese zu einer ein Einklemmen verhindernden Umkehr der Motorlaufrichtung führen, mindestens eine durch mindestens eine zusätzliche, in gleicher oder anderer Weise wirkende, aber denselben Zustand erfassenden Erfassungseinheit bestätigt wird. Die Entscheidungslogik sorgt dafür, daß eine Umkehr der Motorlaufrichtung nur erfolgt, wenn die denselben Zustand erfassenden Erfassungseinheiten eine übereinstimmende Aussage liefern. Unter einer Erfassungseinheit ist je nach Fall nur der entsprechende Sensor zu verstehen oder auch ein Paket mit mehreren Sensoren, beide ggf. durch weitere zugehörige Bauelemente ergänzt.

Unabhängig von dem gewählten Verfahren ist es von Vorteil, wenn gleichzeitig mit einem Abschalten oder Unterdrücken des von der Sicherheitsschaltung ausgehenden Befehls zum Reversieren des Motorstromes ein Warnsignalgeber eingeschaltet wird und dieser bis zum Erreichen der Schließstellung ein Warnsignal abgibt.

Eine zur Durchführung des ersten Verfahrens geeignete Vorrichtung ist so aufgebaut, daß Erfassungseinheiten zum Erfassen des Schließzustandes und/oder des Gefahrenzustandes vorgesehen und mit Schaltmitteln gekoppelt sind, die bei einem Defekt, der zu einem unerwünschten Reversieren des Motorstromes führt, nach einem vorgegebenen Zeitablauf automatisch oder durch Handbetätigung ein Abschalten oder Unterdrücken des von den Erfassungseinheiten ausgehenden Befehls zum Reversieren des Motorstromes und damit ein zwangsweises Schließen der Öffnung ermöglichen.

Eine zur Durchführung des zweiten Verfahrens geeignete Vorrichtung ist so aufgebaut, daß Erfassungseinheiten zum Erfassen des Schließzustandes und/oder des Gefahrenzustandes vorgesehen sind und mindestens zwei Erfassungseinheiten zum Erfassen des gleichen Zustandes dienen. Die Entscheidungslogik ist dabei so aufgebaut oder programmiert, daß sie bei mehreren den Schließzustand signalisierenden Erfassungseinheiten diese in einer Weise verknüpft, daß nicht alle Erfassungseinheiten den Schließzustand signalisieren müssen, damit sie eine automatische Umkehr der Motorlaufrichtung verhindert, aber andererseits bei mehreren den Gefahrenzustand signalisierenden Erfassungseinheiten diese so verknüpft, daß mindestens zwei Erfassungseinheiten den Gefahrenzustand signalisieren müssen, damit sie eine automatische Umkehr der Motorlaufrichtung auslöst. Die Sicherheitseinrichtung wird also nur wirksam, wenn ihre Funktionsfähigkeit weitgehend sichergestellt ist.

Soll die Zuverlässigkeit der Sicherheitsschaltung insgesamt erhöht werden, so daß ihr Ansprechen auch im Fehlerfall mit hoher Wahrscheinlichkeit gewährleistet ist, so kann das durch entsprechende Redundanz erreicht werden.

Der Schließzustand einer Verschlußeinheit kann auf unterschiedliche Art mit unterschiedlichen Erfassungseinheiten erfaßt werden. Eine geeignete Erfassungseinheit besitzt als Sensor vorzugsweise einen Schaltkontakt, den das Verschlußteil in seiner Schließstellung ein- oder ausschaltet und dadurch eine Änderung des am Ausgang der Erfassungseinheit liegenden Potentials bewirkt.

Eine weitere Erfassungseinheit zum Erfassen des Schließzustandes kann so aufgebaut werden, daß sie mehrere, in geeigneten Abständen zueinander angeordnete Sensoren, vorzugsweise einfache Schaltkontakte besitzt. Diese werden als Sensorreihe auf der in Verschlußrichtung liegenden Schließkante des Verschlußteils und/oder der in Verschlußrichtung liegenden Schließkante des Rahmens befestigt. Das Verschlußteil schaltet in seiner Schließstellung alle Sensoren oder ganz bestimmte, nach logischen Kriterien ausgewählte Sensoren ein oder aus und bewirkt dadurch eine Änderung des am Ausgang der Erfassungseinheit liegenden Potentials.

Auch zum Erfassen des mit einem Einklemmen von Körperteilen verbundenen Gefahrenzustandes können unterschiedliche Erfassungseinheiten verwendet werden. Bei einer vorteilhaften Ausführung ist vorgesehen, daß eine zum Erfassen des Gefahrenzustandes geeignete Erfassungseinheit mehrere, in geeigneten Abständen zueinander angeordnete Sensoren, vorzugsweise einfache Schaltkontakte besitzt. Diese werden als Sensorreihe auf der in Verschlußrichtung liegenden Schließkante des Verschlußteils und/oder der in Verschlußrichtung liegenden Schließkante des Rahmens befestigt. Die Aktivierung mindestens eines Sensors durch ein von dem Verschlußteil erfaßtes Körperteil bewirkt hier eine Änderung des Ausgangspotentials. Zur Erfassung des Schließzustandes und des Gefahrenzustandes kann mit der selben Sensorreihe gearbeitet werden, da die Entscheidungslogik eine Aktivierung einzelner Sensoren der Sensorenreihe unterschiedlich bewertet.

Eine andere zum Erfassen des Gefahrenzustandes geeignete Erfassungseinheit ist mit einem Komparator aufgebaut, der den Spannungsabfall des Motorstroms an einem im Motorstromkreis liegenden Meßwiderstand mit einer Referenzspannung vergleicht. Beim Überschreiten eines Motorstromgrenzwertes, infolge eines vom Verschlußteil erfaßten Körperteils, wird eine Potentialänderung des Ausgangssignals bewirkt.

Durch den Einsatz von mindestens zwei, den gleichen Zustand erfassenden Sensoren oder Erfassungseinheiten kann nicht nur die Zuverlässigkeit der Sicherheitsschaltung erhöht werden, sondern es wird auch eine Möglichkeit zur Überwachung geschaffen. Hierzu dient ein Komparator, der die Ausgangssignale von mindestens zwei, denselben Zustand erfassenden Einheiten miteinander vergleicht und bei fehlender Übereinstimmung einen nachgeschalteten Warnsignalgeber aktiviert.

Da die vorstehend beschriebenen Erfassungseinheiten zum Erfassen eines Gefahrenzustandes nur in Verbindung mit einer Erfassungseinheit zum Erfassen des Schließzustandes eine eindeutige Aussage liefern, sind diese Einheiten durch die Entscheidungslogik so verknüpft, daß eine Umschaltung der Laufrichtung des Motors nur erfolgen kann, wenn die Verschlußeinheit ihre Schließstellung noch nicht erreicht hat.

Zur Realisierung der Entscheidungslogik besteht eine Vielzahl bekannter Möglichkeiten, wobei gegebenenfalls auch ein Prozessor zum Einsatz gelangen kann, der meistens noch für weitere Anwendungen herangezogen wird.

Die zur Umkehr des Motorlaufrichtung erforderliche Reversierschaltung ist in vorteilhafter Weise so aufgebaut, daß das von der Entscheidungslogik kommende Signal ggf. über ein Zeitglied verzögert, eine Steuereinheit erreicht, die die Stromflußrichtung des Motorstroms umpolt.

Weiterhin ist es zweckmäßig die Schließvorrichtung so aufzubauen, daß in Reihe zu dem über die Steuereinheit mit Strom versorgten Motor ein Meßwiderstand des Meßwertgrenzsignalgebers liegt.

Ein Taster besitzt eine Umschaltfunktion und führt in Abhängigkeit von der Tastrichtung Minus- oder Pluspotential dem Eingang der Steuereinheit zu, wobei diese ihrerseits die Stellrichtung des Motors entsprechend verändert.

Der erläuterte Aufbau der Schließvorrichtung kann nur eine der vielfältigen Lösungsmöglichkeiten im Sinne des Erfindungsgedankens verdeutlichen. Eine gleichartige Wirkungsweise kann auch unter Zugrundelegung anderer Potentialverhältnisse und mit anderen logischen Schaltelementen erzeugt werden.

Ausführungsbeispiele der Erfindung sind in den Zeichnungen dargestellt und werden im folgenden näher erläutert.

Es zeigen:
- Fig. 1: den prinzipiellen Aufbau einer Schaltung mit logischen Schaltelementen für eine Schließvorrichtung, mit Schaltmitteln zum Abschalten einer defekten Sicherheitsschaltung,
- Fig. 2: einen Ausschnitt aus Fig. 3 entlang der Schnittlinie A-A zur Verdeutlichung eines Schaltkontaktes als Sensor,
- Fig. 3: die Tür von einem PKW mit einem Fenster als Verschlußteil,
- Fig. 4: die Tür eines PKWs mit einer Sensorreihe auf des Schließkante eines Fensters,
- Fig. 5: das Prinzipschaltbild einer Schließvorrichtung mit zwei Sensoren zum Erfassen des Schließzustandes,
- Fig. 6: das Prinzipschaltbild einer Schließvorrichtung mit mehreren eine Überwachung ermöglichenden, Erfassungseinheiten.

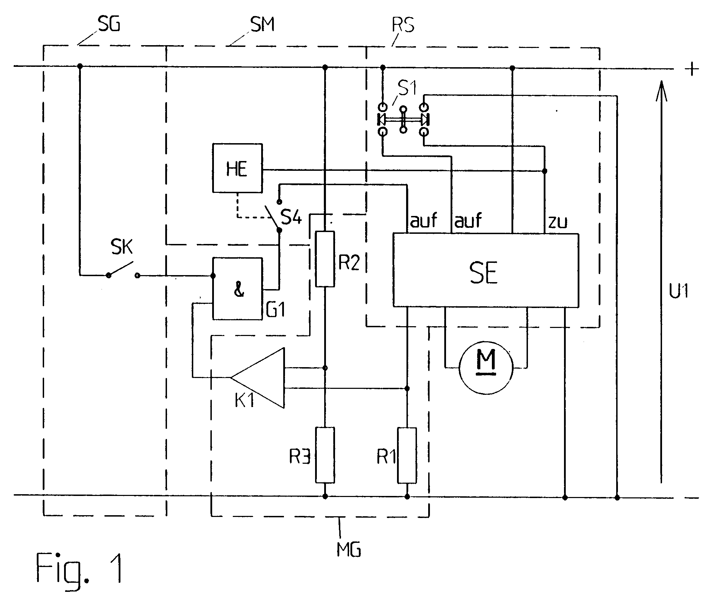

Wie Fig. 1 erkennen läßt, besitzt die zu beschreibende Schließvorrichtung eine Reversierschaltung RS, die es ermöglicht die Stellrichtung eines Motors M unter bestimmten Bedingungen umzukehren. Diese Bedingungen erlangen unter sicherheitstechnischen Aspekten nur in der Schließphase eine Bedeutung, da nur während dieser Zeit die Gefahr eines Einklemmens besteht, so daß während der Öffnungsphase keine Umkehrung der Stellrichtung des Motors erforderlich ist. Der Motorstrom wird bei diesem Beispiel unmittelbar von einer Steuereinheit aufgebracht, um die Darstellung und damit das Verständnis zu erleichtern. Selbstverständlich könnte der Motor M auch im Schaltkreis eines Relais oder Verstärkers liegen. Die Erzeugung des Motorstroms erfolgt mit Hilfe einer Spannungsquelle U1 über die Steuereinheit SE, in der sich auch Betätigungsorgane befinden. Der Motorstrom fließt dabei über einen Meßwiderstand R1.

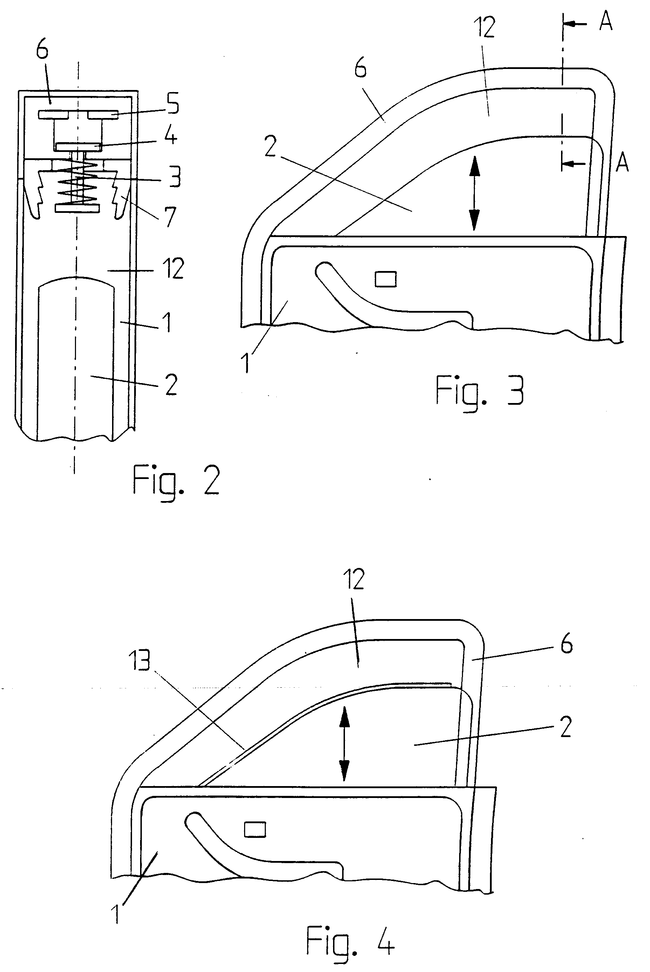

Sollte beim Schließen eines Fensters 2 (Fig. 2 bis 4) versehentlich ein Körperteil eingeklemmt werden, so wird der Motor M hierdurch gebremst und es entsteht ein erhöhter Spannungsabfall an dem Meßwiderstand R1. Dieser bewirkt einen Anstieg des Pluspotentials am ersten Eingang eines Komparators K1, dessen zweiter Eingang dieses Potentials mit einer Referenzspannung vergleicht, die er zwischen zwei Widerständen R2, R3 abgreift, die in Reihe zwischen Plus- und Minuspotential der Spannungsquelle U1 liegen. Überschreitet das dem ersten Eingang des Komparators K1 zugeführte Pluspotential die vorgegebene Referenzspannung am zweiten Eingang, so führt der Komparator ausgangsseitig einer UND-Logik bzw. einer Inhibitions-Logik G1 ein High-Signal zu. Ein zweiter Eingang der Logik G1 ist über einen Stellungsgeber SG, in diesem Fall einen Schaltkontakt SK, mit Pluspotential und somit ebenfalls mit einem High-Signal verbunden. Es sei angenommen, daß es sich bei dem Schaltkontakt SK um einen Schließer handelt, der entsprechend Fig. 2 im Rahmen einer Öffnung 12 so angeordnet ist, daß er bei Erreichen der Schließstellung durch ein Verschlußteil, also in diesem Fall durch das Fenster 2 geschlossen wird. Nach dem Schließen des Schaltkontakts SK, also dem Erreichen der Schließendstellung soll ein ansteigender Spannungsabfall am Meßwiderstand R1 kein Umschalten der Logik G1 bewirken, so daß diese als Inhibitions-Logik auszuführen ist, oder bei einer UND-Logik vor diesem Eingang ein Inverter eingefügt werden muß.

Die Logik G1 geht somit ausgangsseitig auch auf High, wenn der Spannungsabfall an R1 ansteigt und der Schaltkontakt SK noch offen ist. Dieses Signal erreicht einen ersten "Auf-Eingang" der Steuereinheit SE, womit der Motor M das angetriebene Verschlußteil, also beispielsweise das Fenster wieder öffnet und dadurch eine Freigabe ggf. eingeklemmter Körperteile ermöglicht.

Durch Bewegen eines Tasters S1 in seine rechte Einschaltstellung wird einem "Zu-Eingang" der Steuereinheit negatives Potential zugeführt, das ein Zurücksetzen in die Grundstellung bewirkt und damit ein erneutes Schließen des Fensters ermöglicht.

Die Steuereinheit SE muß so aufgebaut sein, daß einem Plussignal an seinem ersten "Auf-Eingang" Vorrang gegenüber einem Minussignal an seinem "Zu-Eingang" eingeräumt wird. Dies ist wichtig, damit bei einer Einklemmgefahr sich das Fenster automatisch wieder öffnet. Unabhängig von der automatischen Sicherheitsöffnung kann durch eine Bewegung des Tasters S1 von seiner Ruhelage in seine linke Einschaltstellung einem zweiten "Auf-Eingang" der Steuereinheit positives Potential zugeführt werden, so daß auch ein gezieltes Öffnen des Fensters von Hand möglich ist.

Es sind nun viele Fehler denkbar, die zu einer Fehlfunktion der Sicherheitsschaltung führen können. Würde sich z.B. der Schaltkontakt SK wegen eines Kontaktfehlers in der Schließstellung nicht schließen, so würde durch den in der Schließstellung ansteigenden Motorstrom ein Gefahrenzustand vorgetäuscht. Dies hätte ein Reversieren des Motorstroms zur Folge und das Verschlußteil 2 würde sich öffnen. Entsprechende Verhältnisse würden sich ergeben, wenn die Schließmechanik des Verschlußteils 2 schwergängig würde und es dadurch zu einem starken Anstieg des Motorstromes käme.

Da derartige Defekte im allgemeinen weder erkennbar noch behebbar sind, wird jedem Schließversuch ein erneutes Öffnen folgen. Damit diese mißliche Situation beendet werden kann, sind Schaltmittel SM vorgesehen, die es erlauben nach Ablauf einer vorgegebenen Zeitspanne das ein Öffnen bewirkende Signal der Sicherheitsschaltung abzuschalten. Wird der Taster S1 eine bestimmte Zeit lang in seiner rechten Stellung gehalten, so wird eine mit einem entsprechend ausgelegten Verzögerungsglied versehene Hilfseinheit HE aktiviert und schaltet über einen Schalter S4 das ein Öffnen bewirkende Signal der Sicherheitsschaltung ab. Dieses Signal gelangt somit nicht mehr zum "Auf-Eingang" der Steuereinheit SE. Das über den Taster S1 an den "Zu-Eingang" der Steuereinheit SE gelegte Signal wird somit wirksam.

Die Fig. 2 bis 4 zeigen verschiedene mechanische Teile der Schließvorrichtung. In einer Autotür 1 erkennt man eine Fensterscheibe 2, die beim Schließen einer Öffnung 12 in ihrer Schließendstellung auf einen Kontaktgeber trifft, zu dem eine Kontaktfeder 3, ein als Kontaktbrücke wirkendes bewegliches Kontaktteil 4 und Festkontaktteile 5 gehören. Der Schaltkontakt ist in einem Rahmen 6 befestigt und beidseitig von Dichtungslippen einer Dichtung 7 umgeben.

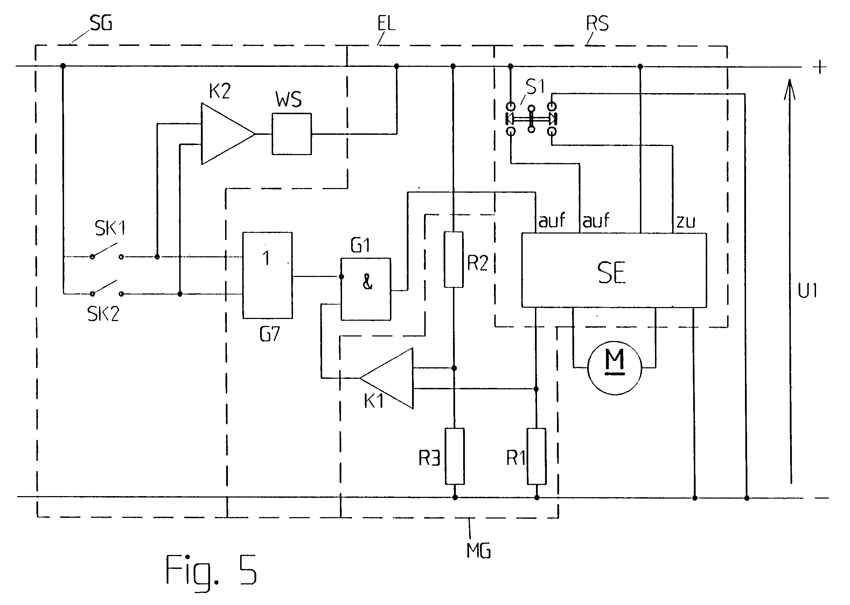

Fig. 5 zeigt eine Schaltung, die in ihrem Grundaufbau der Fig. 1 entspricht. Der Stellungsgeber SG ist hier jedoch so modifiziert, daß von zwei als Sensoren wirkenden, mit einer ODER-Logik verbundenen Schaltkontakten SK1, SK2 nur einer einschalten muß, um zu verhindern, daß sich das Verschlußteil 12 nach einem Schließbefehl wieder öffnet. Hierdurch wird erreicht, daß es bei einem Ausfall eines der beiden Schaltkontakte SK1, SK2 nicht zu einer Störung der Schließvorrichtung kommt, was bei nur einem Schaltkontakt im Fehlerfall unvermeidlich wäre, sofern nicht eine anderweitige Vorsorge getroffen wurde.

Damit der Kontaktfehler jedoch nicht unerkannt bleibt, ist ein Komparator K2 vorgesehen, der die Ausgangssignale der beiden Sensoren SK1, SK2 miteinander vergleicht und im Fehlerfall einen Warnsignalgeber WG aktiviert, der sich ggf. nach einer bestimmten Zeit selbsttätig wieder abschaltet.

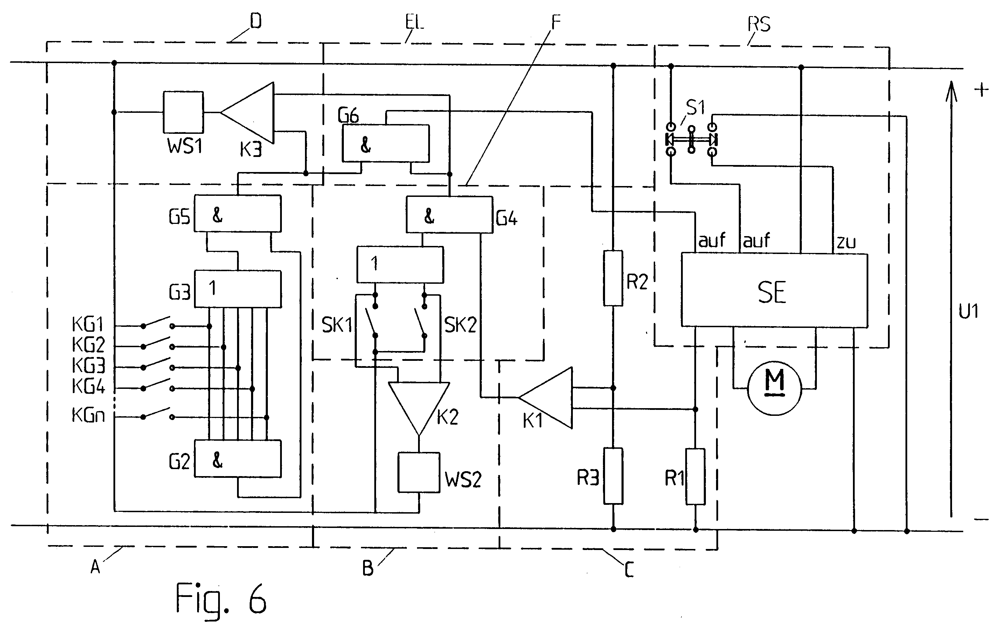

Die Schaltung nach Fig.6 ist etwas aufwendiger gestaltet und erreicht dadurch eine besonders hohe Zuverlässigkeit bei der Erfassung eines Gefahrenzustandes. Die Funktionseinheit A besitzt eine aus mehreren Kontaktgebern KG1 bis KGn aufgebaute Sensorreihe, die, wie in Fig.4 dargestellt, auf einer Schließkante des Verschlußteils 2 angeordnet sind.

Sollte beim Schließen des Fensters versehentlich ein Körperteil eingeklemmt werden, so wird mindestens einer von den an Pluspotential liegenden Kontaktgebern KG1-KGn in seine Einschaltstellung gedrückt und aktiviert dadurch den zugehörigen Eingang einer nachgeschalteten ODER-Logik G3, die hierdurch ebenfalls aktiviert wird und den Eingang einer nachgeschalteten UND-Logik G5 mit High beaufschlagt. An ihrem zweiten Eingang erhält die UND-Logik G5 nur dann ebenfalls ein High, wenn mindestens ein Kontaktgeber KG1-KGn nicht eingeschaltet wurde. Hierzu ist der zweite Eingang der UND-Logik G1 mit dem Ausgang einer NAND-Logik G2 verbunden, deren Eingänge mit den Eingängen der ODER-Logik G3 verbunden sind.

Mit Hilfe der NAND-Logik G2 wird sichergestellt, daß in der Schließstellung zwangsläufig ausgelöste Sensoraktivierungen nicht als Gefahr interpretiert werden. Dies kann alternativ auch dadurch erfolgen, daß nur ganz bestimmte, sich in exponierter Lage befindende Sensoren von der NAND-Logik G2 erfaßt werden, die im Gefahrenfall nie aktiviert würden. Am prinzipiellen Schaltungsaufbau ändert sich hierdurch nichts, so daß sich eine Darstellung dieser Schaltungsvariante erübrigt.

Die im Gefahrenfall aktivierte UND-Logik G5 gibt ein High-Signal ab, das unmittelbar dem zur Reversierschaltung RS gehörigen "Auf-Eingang" der Steuereinheit SE zugeführt werden könnte, der dann seinerseits ein Umschalten des Reversierschalters S3 in seine "Auf-Stellung" bewirkt. Zur Steigerung der Zuverlässigkeit ist der Ausgang der UND-Logik G5 aber an den Eingang einer weiteren UND-Logik G6 geführt, an derem zweiten Eingang der Ausgang einer weiteren Funktionseinheit F liegt, die ebenfalls, aber auf andere Weise einen Gefahrenzustand erfassen kann. Diese weitere Funktionseinheit F ist in gleicher Weise aufgebaut und wirkt auch so wie die entsprechenden Schaltelemente von Fig. 5, so daß diesbezüglich und auch im Hinblick auf die Funktionseinheiten B und C auf die vorstehende Beschreibung verwiesen werden kann.

Die Ausgangssignale der Funktionseinheiten A und F gelangen zu einer zusätzlichen UND-Logik G4, die dafür sorgt, daß der "Auf-Eingang" der Steuereinheit SE nur aktiviert wird, wenn die Funktionseinheiten A und F gemeinsam einen Gefahrenzustand signalisieren. Im Fehlerfall wird auch hier wieder mit Hilfe eines Komparators K3 ein Warnsignalgeber WS1 aktiviert.

## Patentansprüche

1. Verfahren zum automatischen Schließen von Öffnungen, insbesondere bei Kraftfahrzeugen, durch ein motorgetriebenes Verschlußteil, bei dem eine Sicherheitsschaltung zum Schutz von Körperteilen mit Hilfe von Erfassungseinheiten bestimmte Zustände erfaßt und eine Entscheidungslogik bei einer Einklemmgefahr so auf den Motor (M) einwirkt, daß ein Befehl zum Reversieren des Motorstroms und damit zum Umkehren der Laufrichtung des Motors gegeben wird, der ein Einklemmen verhindert, dadurch gekennzeichnet, daß beim Auftreten eines durch die Wirkung der Sicherheitsschaltung zu einem unerwünschten Reversieren des Motorstroms führenden Defektes nach Ablauf einer vorgegebenen Zeit der von der Sicherheitsschaltung ausgehende Befehl zum Reversieren des Motorstroms automatisch oder infolge einer Handbetätigung abgeschaltet oder unterdrückt wird und dadurch ein zwangsweises Schließen der Öffnung ermöglicht wird.

2. Verfahren nach Anspruch 1, dadurch gekennzeichnet, daß Befehle, die zu einer ein Einklemmen verhindernden Umkehr der Motorlaufrichtung führen, erfaßt werden und nach einer angemessenen Verzögerung automatisch eine erneute Umkehr der Motorlaufrichtung zum Schließen der Öffnung erfolgt und daß im Fall anhaltender Meldung eines Gefahrenzustandes die hierdurch ausgelösten Umkehrzyklen des Motorstromes gezählt werden und nach einer vorgegebenen Zyklenzahl, die Meldung eines Gefahrenzustandes ignoriert wird und die Entscheidungslogik ein von der Sicherheitsschaltung unabhängiges Schließen der Öffnung auslöst.

3. Verfahren nach Anspruch 1, **dadurch gekennzeichnet**, daß eine Hilfseinheit den von einem handbetätigten Taster ausgehenden Schließbefehl registriert und mit Hilfe eines Zeitgliedes die von der Dauer des Tastendrucks abhängige Befehlsdauer bewertet und nach Überschreiten einer vorgegebenen Zeit einen Steuerbefehl auslöst, der zum Abschalten oder Unterdrücken des von der Sicherheitsschaltung ausgehenden Befehls zum Reversieren des Motorstromes führt.

4. Verfahren zum automatischen Schließen von Öffnungen, insbesondere bei Kraftfahrzeugen, durch ein motorgetriebenes Verschlußteil, bei dem eine Sicherheitsschaltung zum Schutz von Körperteilen mit Hilfe von Erfassungseinheiten bestimmte Zustände erfaßt und eine Entscheidungslogik bei einer Einklemmgefahr so auf den Motor (M) einwirkt, daß dieser durch Umkehren seiner Laufrichtung ein Einklemmen verhindert, **dadurch gekennzeichnet**, daß von den durch Erfassungseinheiten erfaßten Zuständen, soweit diese zu einer ein Einklemmen verhindernden Umkehr der Motorlaufrichtung führen, mindestens eine durch mindestens eine zusätzliche, in gleicher oder anderer Weise wirkende, aber denselben Zustand erfassenden Erfassungseinheit bestätigt wird und die Entscheidungslogik dafür sorgt, daß eine Umkehr der Motorlaufrichtung nur erfolgt, wenn die denselben Zustand erfassenden Erfassungseinheiten eine übereinstimmende Aussage liefern.

5. Verfahren nach einem der vorhergehenden Ansprüche, **dadurch gekennzeichnet**, daß gleichzeitig mit einem Abschalten oder Unterdrücken des von der Sicherheitsschaltung ausgehenden Befehls zum Reversieren des Motorstromes ein Warnsignalgeber eingeschaltet wird, der bis zum Erreichen der Schließstellung ein Warnsignal abgibt.

6. Vorrichtung zum automatischen Schließen von Öffnungen (12), insbesondere bei Kraftfahrzeugen, durch ein motorgetriebenes Verschlußteil (2), bei dem eine Sicherheitsschaltung zum Schutz von Körperteilen mit Hilfe von Erfassungseinheiten (SG, MG) bestimmte Zustände erfaßt und eine Entscheidungslogik (EL) bei einer Einklemmgefahr so auf den Motor (M) einwirkt, daß dieser durch Umkehren seiner Laufrichtung ein Einklemmen verhindert, **dadurch gekennzeichnet**, daß Erfassungseinheiten zum Erfassen des Schließzustandes (SG) und/oder des Gefahrenzustandes (MG) vorgesehen und mit Schaltmitteln (SM) gekoppelt sind, die bei einem Defekt, der zu einem unerwünschten Reversieren des Motorstromes führt, nach einem vorgegebenen Zeitablauf automatisch oder durch Handbetätigung ein Abschalten oder Unterdrücken des von den Erfassungseinheiten (SG, MG) ausgehenden Befehls zum Reversieren des Motorstromes und damit ein zwangsweises Schließen der Öffnung (12) ermöglichen.

7. Vorrichtung zum automatischen Schließen von Öffnungen (12), insbesondere bei Kraftfahrzeugen, durch ein motorgetriebenes Verschlußteil (2), bei dem eine Sicherheitsschaltung zum Schutz von Körperteilen mit Hilfe von Erfassungseinheiten (A, C, F, SK1, SK2) bestimmte Zustände erfaßt und eine Entscheidungslogik (EL) bei einer Einklemmgefahr so auf den Motor (M) einwirkt, daß dieser durch Umkehren seiner Laufrichtung ein Einklemmen verhindert, **dadurch gekennzeichnet**, daß Erfassungseinheiten zum Erfassen des Schließzustandes (SK1, SK2) und/oder des Gefahrenzustandes (A, F) vorgesehen sind und mindestens zwei Erfassungseinheiten (SK1, SK2; A, F) zum Erfassen des gleichen Zustandes dienen und die Entscheidungslogik (EL) so aufgebaut oder programmiert ist, daß sie bei mehreren den Schließzustand signalisierenden Erfassungseinheiten (SK1, SK2) diese so verknüpft, daß nicht alle den Schließzustand signalisieren müssen, damit sie eine automatische Umkehr der Motorlaufrichtung verhindert und daß sie bei mehreren den Gefahrenzustand signalisierenden Erfassungseinheiten (A, F) diese so verknüpft, daß mindestens je zwei Erfassungseinheiten den Gefahrenzustand signalisieren müssen, damit sie eine automatische Umkehr der Motorlaufrichtung auslöst.

8. Vorrichtung nach einem der Ansprüche 6 und 7, dadurch gekennzeichnet, daß redundant wirkende Erfassungseinheiten vorgesehen sind, die in Verbindung mit der Entscheidungslogik dafür sorgen, daß bei einer Störung der zur Signalisierung von Gefahrenzuständen dienenden Erfassungseinheiten ein gefahrenabhängiges Reversieren des Motors (M) trotzdem gewährleistet ist.

9. Vorrichtung nach einem der Ansprüche 6 bis 8, dadurch gekennzeichnet, daß bei einer zum Erfassen des Schließzustandes geeigneten Erfassungseinheit (SG) als Sensor ein Schaltkontakt (SK) dient, den das Verschlußteil (2) in seiner Schließstellung ein- oder ausschaltet und dadurch eine Änderung des am Ausgang der Erfassungseinheit (SG) liegenden Potentials bewirkt.

10. Vorrichtung nach einem der Ansprüche 6 bis 9, dadurch gekennzeichnet, daß eine zum Erfassen des Schließzustandes geeignete Erfassungseinheit (A) mehrere, in geeigneten Abständen zueinander angeordnete Sensoren (KG1-KGn), vorzugsweise einfache Schaltkontakte besitzt, die als Sensorreihe (13) auf der in Verschlußrichtung liegenden Schließkante des Verschlußteils (2) und/oder der in Verschlußrichtung liegenden Schließkante des Rahmens (6) befestigt ist und das Verschlußteil (2) in seiner Schließstellung alle Sensoren oder ganz bestimmte, nach logischen Kriterien ausgewählte Sensoren ein- oder ausschaltet und dadurch eine Änderung des am Ausgang der Erfassungseinheit (A) liegenden Potentials bewirkt.

11. Vorrichtung nach einem der Ansprüche 6 bis 10, dadurch gekennzeichnet, daß eine zum Erfassen des Gefahrenzustandes geeignete Erfassungseinheit (A) mehrere, in geeigneten Abständen zueinander angeordnete Sensoren (KG1-KGn), vorzugsweise einfache Schaltkontakte besitzt, die als Sensorreihe (13) auf der in Verschlußrichtung liegenden Schließkante des Verschlußteils (2) und/oder der in Verschlußrichtung liegenden Schließkante des Rahmens (6) befestigt ist und bei Aktivierung mindestens eines Sensors durch ein von dem Verschlußteil erfaßtes Körperteil eine Änderung des Ausgangspotentials bewirkt.

12. Vorrichtung nach einem der Ansprüche 2 bis 11, dadurch gekennzeichnet, daß eine zum Erfassen des Gefahrenzustandes geeignete Erfassungseinheit (C, MG) mit einem Komparator (K1) aufgebaut ist, der den Spannungsabfall des Motorstroms an einem im Motorstromkreis liegenden Meßwiderstand (R1) mit einer Referenzspannung vergleicht und beim Überschreiten eines Motorstromgrenzwertes, infolge eines vom Verschlußteil erfaßten Körperteils, eine Potentialänderung des Ausgangssignals bewirkt.

13. Vorrichtung nach einem der Ansprüche 2 bis 12, dadurch gekennzeichnet, daß mindestens ein Komparator (K2, K3) die Ausgangssignale von mindestens zwei, denselben Zustand erfassenden Erfassungseinheiten (A, F; SK1, SK2) miteinander vergleicht und bei fehlender Übereinstimmung einen nachgeschalteten Warnsignalgeber (WS1, WS2) aktiviert.

14. Vorrichtung nach einem der Ansprüche 6 bis 13, dadurch gekennzeichnet, daß mindestens eine den Schließzustand erfassende Erfassungseinheit (SG) mit mindestens einer den Gefahrenzustand erfassenden Erfassungseinheit (MG) durch die Entscheidungslogik so verknüpft ist, daß diese eine Umschaltung der Laufrichtung nur ermöglicht, wenn das Verschlußteil (2) seine Schließstellung noch nicht erreicht hat.

15. Vorichtung nach Anspruch 14, dadurch gekennzeichnet, daß zum Reversieren des Motors (M) eine Reversierschaltung (RS) dient, zu der eine Steuereinheit (SE) gehört, die ausgehend von einer Spannungsquelle (U1) den Motor (M) mit Strom versorgt und die in Abhängigkeit von den ist zugeführten Eingangssignalen die Stromrichtung des Motorstroms vorgibt, und daß die Steuereinheit (SE) bei gleichzeitiger Zuleitung sowohl eines Plus- als auch eines Minussignals dem Signal Vorrang einräumt, das zu einem Öffnen des Verschlußteils (2) führt.

16. Vorrichtung nach einem der Ansprüche 1 bis 15, dadurch gekennzeichnet, daß im Motorstromkreis ein Meßwiderstand (R1) des Meßwert-Grenzsignalgebers (MG) liegt.

17. Vorrichtung nach Anspruch 16, dadurch gekennzeichnet, daß ein Taster (S1) eine Umschaltfunktion besitzt und in Abhängigkeit von der Tastrichtung Minus- oder Pluspotential dem Eingang der Steuereinheit (SE) zuführt, wodurch diese die Stellrichtung des Motors entsprechend verändert.
